# EUROPEAN PATENT APPLICATION

(11) **EP 4 485 389 A1**
(43) Date of publication of application: **01.01.2025**
(21) Application number: 24185429.8
(22) Date of filing: 28.06.2024
(51) Int. Cl.: G06V 20/52

(54) **ITEM SIMILARITY ANALYSIS FOR THEFT DETECTION**

(30) Priority: 30.06.2023 US 202318217422
(71) Applicant: NCR Voyix Corporation, Atlanta, GA 30308-1007 (US)
(72) Inventor: GARDNER, Noah Tyler, Dacula, GA (US); FARROW, Matthew K., Canton, MA (US)
(74) Representative: Secerna LLP

(57) **Abstract**

A base machine learning model (MLM) is trained to generate N-dimensional feature vectors from images of items per item code or category. A principal component analysis is processed on the N-dimensional feature vectors per item code to generate fewer reference vectors per item code, each reference vector includes fewer dimensions or features than the corresponding N-dimensional feature vectors. A similarity MLM is trained to receive an item code, corresponding reference vectors for the item code, and a current reduced dimensionality feature vector for a current image of an item associated with a transaction. The similarity MLM produces a similarity score or determines whether the current item is the same or similar to a reference item corresponding to the item code. When the current item is not the same or is dissimilar to the reference item, an alert or an interrupt is provided to audit the transaction for potential theft.

## Description

### Background

Self-checkout has been growing in popularity in recent years. However, it is nearly impossible for an attendant to verify that customers are telling the truth about which produce they are weighing or scanning.

Item recognition techniques used to address the issue often have unacceptable response times since image processing is processor and memory intensive. Customers and retailers expect nearly instantaneous decisions for item recognition so as not to impact transaction throughput at the self-checkouts. Unfortunately, current item recognition techniques often have unacceptable and unusable response times. Furthermore, item recognition techniques require laborious training and continuous maintenance.

### Summary

In various embodiments, a system and methods for item similarity analysis for theft detection are presented. A base machine learning model ("model" and/or MLM) is trained to produce a N-dimensional feature vector from images of items and linked to an item code or an item category. The N features of each N-dimensional feature vector are reduced to a smaller subset of features and stored as reference feature vectors in a reference storage bank. A similarity model is trained to take as input an item code or category, the corresponding reference feature vectors linked to the item code or category, and current reduced feature vector, which is derived by the base model from a current image of an item and the item code or category and then reduced to the smaller subset of features. The output of the similarity model is a similarity score indicating the degree to which the item associated with the current reduced feature vector is similar to a reference item code or category associated with the reference feature vectors. The similarity score is compared against a threshold score to determined whether item is to be flagged as being incorrectly identified, in which case a transaction associated with the item is interrupted for confirmation and/or audit of the item in view of the reference item.

According to a first aspect of the present invention there is provided a method, comprising obtaining a feature vector having N-dimensions based on an image of an item associated with a transaction; reducing the N-dimensions to fewer dimensions to generate a reduced dimensionality feature vector for the image; obtaining reference vectors linked to an item code provided for the item during the transaction; determining based on the reference vectors, the reduced dimensionality feature vector, and the item code whether the item is similar or not similar to a reference item linked to the reference vectors.

Aptly, the method further comprises interrupting the transaction for an audit of the item when the determining indicates the item is dissimilar to the reference item.

Aptly, the method further comprises receiving an override for the transaction indicating the item is similar to the reference item.

Aptly, the method wherein receiving the override further includes adding or updating a reference storage back to include the reduced dimensionality feature vector as a new reference vector linked to the item code.

Aptly, the method wherein obtaining the feature vector further includes providing the image and the item code to a base machine learning model (MLM) as input and receiving the feature vector as output from the base MLM.

Aptly, the method wherein reducing further includes processing a principal component analysis on the N-dimensions of the feature vector to generate the fewer dimensions in the reduced dimensionality feature vector.

Aptly, the method wherein reducing further includes providing the feature vector and the item code to a principal component analysis (PCA) MLM as input and receiving the reduced dimensionality feature vector as output from the PCA MLM.

Aptly, the method wherein determining further includes providing the item code, the reference vectors, and the reduced dimensionality feature vector to a similarity machine learning model (MLM) as input and receiving a similarity score indicating a degree to which the item is similar to the reference item.

Aptly, the method further comprises, comparing the similarity score to a threshold score to determined whether the item is similar or not similar to the reference item.

Aptly, the method wherein determining further includes providing the item code, the reference vectors, the reduced dimensionality feature vector, and threshold score linked to the item code to a similarity machine learning model (MLM) as input and receiving a decision as to whether the item is similar or dissimilar to the reference item as output from the similarity MLM.

According to a second aspect of the present invention there is provided a method, comprising training a base machine learning model (MLM) to generate N-dimensional feature vectors for item images of items per price lookup (PLU) code for each item; training a principal component analysis (PCA) MLM to generate fewer vectors per PLU code as reference vectors, each reference vector having fewer dimensions that the N-dimensional feature vectors; training a similarity MLM to generate a similarity score between a given item and a given reference item based on a given PLU code, corresponding reference vectors for the given PLU code, and a given reduced dimensionality feature vector for a given image of the given item; receiving a current item image for a current item and a current PLU code associated with the current item; obtaining a current N-dimensional feature vector from the base MLM using the current item image and the current PLU code; obtaining current reference vectors linked to the current PLU code from a cache table; obtaining a current reduced dimensionality feature vector from the PCA MLM based on the current PLU code and the current N-dimensional feature vector; obtaining a current similarity score from the similarity MLM based on the current PLU code, the current reference vectors, and the current reduced dimensionality feature vector; and determining whether to interrupt a current transaction associated with the current item for potential theft based on the current similarity score.

Aptly, the method further comprises updating the current reference vectors in the cache table to account for the current reduced dimensionality feature vector when potential theft is determined and an override is received for the current transaction indicating that there was no theft.

Aptly, the method further comprises causing a transaction terminal processing the current transaction to process a custom exception workflow when potential theft is determined.

Aptly, the method wherein training the PCA MLM further includes loading the cache table into a cache from a reference storage bank after the training of the PCA MLM, wherein the reference storage bank includes the reference vectors.

Aptly, the method wherein loading further includes maintaining the reference storage bank in synchronization with the cache table of the cache.

Aptly, the method wherein determining further includes comparing the current similarity score against a threshold score to determine whether potential theft is present for the current transaction.

Aptly, the method wherein comparing further includes obtaining the threshold score from a plurality of threshold scores based on the current PLU code.

Aptly, the method wherein determining further includes sending an interrupt to a terminal that is processing the current transaction when the similarity score is at or below a current PLU code specific threshold score.

According to a third aspect of the present invention there is provided a system comprising at least one server comprising at least one processor and a non-transitory computer-readable storage medium; the non-transitory computer-readable storage medium comprising executable instructions; and the executable instructions when executed by at least one processor cause the at least one processor to perform operations, comprising receiving an item image for an item placed on a scale of a terminal during a transaction; receiving an item code entered for the item at the terminal; obtaining an N-dimensional feature vector based on the item image and the item code; obtaining a reduced dimensionality feature vector for the N-dimensional vector based on the N-dimensional vector and the item code; obtaining reference vectors linked to the item code, each reference vector having a same number of dimensions as the reduced dimensionality feature vector; determining based on the item code, the reduced dimensionality feature vector, and the reference vectors whether the item is similar or not similar to a reference item linked to the reference vectors and the item code; and interrupting the transaction for an audit when the determining indicates that the item is dissimilar to the reference item.

Aptly, the system wherein the terminal is a self-service terminal operated by a customer during the transaction or the terminal is a point-of-sale terminal operated by a cashier for the customer during the transaction.

### Brief Description of the Drawings

FIG. 1A is a diagram of a system for item similarity analysis for theft detection, according to an example embodiment.
FIG. 1B is a flow diagram of a method for item similarity analysis for theft detection, according to an example embodiment.
FIG. 2 is a flow diagram of another method for item similarity analysis for theft detection, according to an example embodiment.
FIG. 3 is a flow diagram of still another method for item similarity analysis for theft detection, according to an example embodiment.

### Detailed Description

Self-checkouts rely heavily on the accuracy and honest of customers when produce is purchased. Frequently, produce items lack barcodes such that the customers are asked to search for their produce item's price lookup (PLU) code and select or enter the corresponding PLU code during the transaction. Fine-grain item recognition is often difficult particularly for different types of produce such as organic versus non organic. Item recognition also requires a substantial amount of machine learning model (hereinafter just "model" and/or "MLM") training and maintenance. The response times required by an image recognition model to resolve an item code from one or more images of an item are delayed to a point that the benefit of fine-grain item recognition is outweighed by simply relying on the accuracy and honesty of the customer in providing the correct PLU codes. Consequently, many retailers still rely on the entered PLU codes provided by their customers and are experiencing more shrinkage or theft than should be the case.

The aforementioned issues with produce-related shrinkage or theft are reduced with the teachings herein and below. A base model is trained to produce N features as dimensions from item images. Values for each feature are stored in a feature vector such that each feature vector includes N values. Each feature vector is mapped to a PLU code associated with a given item. The feature vectors are then processed through a principal component analysis (PCA) module or model for purposes of substantially reducing the dimensions or features and the corresponding sizes of the feature vectors. The reduced dimensionality feature vectors are linked to their corresponding PLU codes and stored in a reference storage bank.

The reduced dimensionality feature vectors are loaded into cache from the reference storage bank. During a transaction, a current image of an item and an entered PLU code provided by an operator of the terminal are provided as input to the base model and an intermediate current feature vector is obtained for the item based on the current image and the entered PLU code. The intermediate current feature vector is processed through the PCA analysis module and/or model and a smaller reduced feature vector is obtained as output. The entered PLU code is then used to search the cache and obtain the model reduced dimensionality feature vectors linked to the entered PLU code. The model feature vectors, the reduced feature vector, and the entered PLU code are provided as input to a similarity or comparison model which outputs a similarity score indicating the degree to which the current item is similar to a reference item associated with the entered PLU code.

When the similarity score is at or falls below a threshold score, an alert or an interrupt is sent to the terminal processing the transaction. The terminal processes an exception workflow based on the alert or interrupt which requests the operator to confirm the entered PLU code for the current item. In an embodiment, if the operator confirms the entered PLU code for the current item, the exception workflow causes the terminal to suspend the transaction for an attendant audit. In an embodiment, when the attendant confirms the current item is to be associated with the PLU code via an override, the reduced feature vector corresponding to the entered PLU code is updated in cache and the reference storage bank without any retraining of the models being required.

In an embodiment, the threshold score is assigned or configured by item code or item category. For example, an item code for bananas can have a similarity threshold score of 60% whereas an item code for tomatoes can have a similarity value of 75%. This accounts for the fact that some produce items are easier to identify than other produce items.

The techniques discussed here substantially reduces the sizes of the feature vectors used for item similarity analysis and thereby substantially reduces memory utilization and improves processor throughput and correspondingly response times in providing a similarity score for a given item of a transaction. Response times are further improved because the model reduced dimensionality vectors are accessed from and indexed within cache. Furthermore, because the sizes and number of model reduced dimensionality vectors are reduced along with the reduced feature vector of a current item similarity decision, the response time and processor throughput of the similarity or the comparison model is improved.

Additionally, training of the models are substantially reduced over what has conventionally required through use of a pipeline of models, which includes a base model followed by a PCA model and further followed by a similarity or a comparison model. When a comparison model incorrectly identifies an item as being dissimilar to a corresponding reference item associated with a given PLU code, the reduced feature vector corresponding to the item can be added or updated as a model reduced feature vector in the reference storage bank.

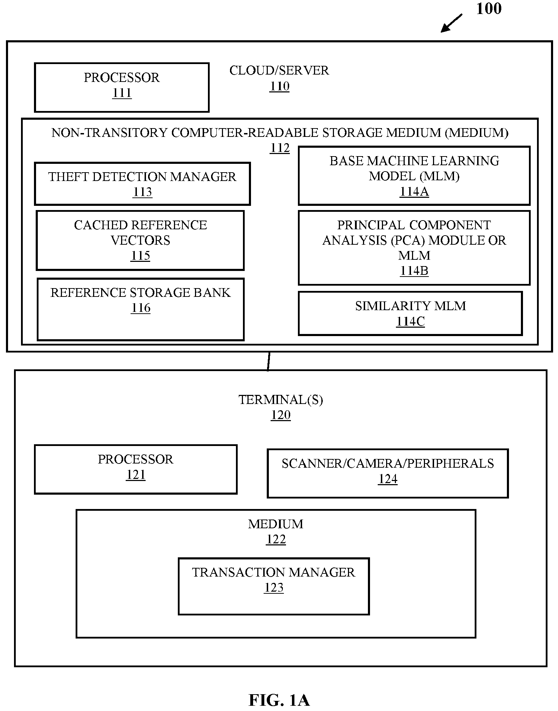

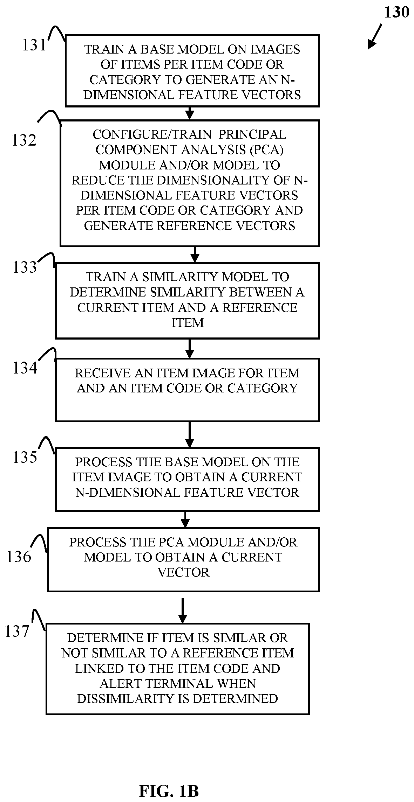

Within this initial context, various embodiments are now presented with reference to FIGS. 1A and 1B. FIG. 1A is a diagram of a system 100 for item similarity analysis for theft detection, according to an example embodiment. It is to be noted that the components are shown schematically in greatly simplified form, with only those components relevant to understanding of the embodiments being illustrated.

Furthermore, the various components illustrated in FIG. 1A and their arrangement is presented for purposes of illustration only. It is to be noted that other arrangements with more or less components are possible without departing from the teachings of item similarity analysis for theft detection as presented herein and below.

The system 100 includes a cloud 110 or a server 110 (herein after just "cloud 110") and a plurality of terminals 120. Cloud 110 includes a processor 111 and a non-transitory computer-readable storage medium (herein after just "medium") 112, which includes executable instructions for a theft detection manager 113, a base model 114A, a PCA module or model 114B, and a similarity model 114C. The instructions when executed by processor 111 perform operations discussed herein and below with respect to 113, 114A, 114B, and 114C. Medium 112 also includes cached reference vectors 115 residing in cache memory and a reference storage bank 116.

Each terminal 120 includes a processor 121 and medium 112, which includes executable instructions for a transaction manager 123. Each terminal 120 further includes a scanner/camera/peripherals 124 to capture at least one image of an item during a transaction at the corresponding terminal 120. The instructions when executed by processor 121 perform operations discussed herein and below with respect to 123.

Initially, base model 114A is trained on images depicting produce items and corresponding PLU codes to generate N-dimensional feature vectors linked the corresponding PLU codes. Each dimension in a given N-dimensional feature vector corresponding to a unique feature. That is, each N-dimensional feature vector includes N-dimensions, each dimension of the N-dimensions representing a unique feature of a plurality of features. By way of example only, the features include height, width, length, color, texture, lines, edges, color transitions, color variations, etc. Each feature includes a value for the corresponding feature within the feature vector. The images of the items are cropped prior to training so just pixels associated with the corresponding items are present in the training images ensuring that the features in the N-dimensional feature vectors are restricted to features of the item and not background features associated with the surface areas and surroundings captured in the original training images with the corresponding items.

Once the base model 114A is trained, a PCA module or model 114B is configured or trained to reduce each N-dimensional feature vector to a smaller subset of dimensions or features. In an embodiment, a PCA module 114B is configured to statistically reduce the dimensionality of all feature vectors associated with a given item code or category by linearly transforming a data set associated with the feature vectors into a new coordinate system where variation in the data is described with fewer dimensions than what was observed in the data set of feature vectors associated with a given item code or category. The features are plotted in multidimensional space and clustered into fewer dimensions. In an embodiment, a PCA model/MLM 114B is trained to perform the reduced dimensionality on a data set of N-dimensional feature vectors per item code or category. In an embodiment, the PCA is provided as a combination of both a statistical module 114B and a model/MLM 114B. The output of the PCA module and/or model 114B is a reduced dimensionality reference vector linked to a given item code or category.

Once the PCA module and/or model 114B is configured and/or trained, similarity model/MLM 114C is trained to receive a small set of reference vectors, a given item code or category linked to the reference vectors, and a current reduced dimensionality feature vector for a current item image of a current item. The similarity model 114C produces as output a similarity score, which indicates the degree to which the current item is similar to a reference item associated with the given item code.

Once models and/or module 114A-114C are trained, system 100 is ready for providing and evaluating similarity scores for item images of items placed on a produce scale of terminal 120 during a transaction. Initially, theft detection manager loads the reference vectors of the reference storage bank 116 into cache as cached reference vectors 115. In an embodiment, the cached reference vectors 115 are stored in an in-memory table indexed by PLU codes. Transaction manager 123 receives an item image captured by scanner/camera 124 when the item associated with the item image is placed on a produce scale and an operator of terminal 120 initiates a PLU code search for the item within the transaction interface of transaction manager 123. Once the operator selects or enters a PLU code from the interface for the item, the item image and the PLU code are provided to theft detection manager 113.

Responsive to the PLU code, theft detection manager 113 obtains the reference vectors from the cached reference vectors 115. Simultaneously, theft detection manager 113 provides the image of the item and the PLU code to the base model 114A and receives as output an N-dimensional feature vector for the item. Next, the N-dimensional feature vector and the PLU code are provided as input to the PCA module and/or model 114B. The PCA module or model 114B provides as output a reduced dimensionality feature vector as a current feature vector to theft detection manager 113. Theft detection manager 113 provides the reference vectors obtained from cache, the PLU code, and the current feature vector as input to the similarity model 114C. Similarity model 114C provides back a similarity score indicating the degree to which the item of the transaction is similar to a reference item associated with the PLU code and the reference vectors.

In an embodiment, theft detection manager 113 compares the similarity value returned from the similarity model 114C against a threshold score. In an embodiment, the threshold score is selected from a plurality of threshold scores based on the current PLU code for the item and the reference item.

In an embodiment, the similarity model 114C is configured or trained to receive a PLU code specific threshold score as input and determine based thereon whether the item of the transaction is similar to the reference item or not. In this embodiment, theft detection manager 113 does not need to perform a threshold score comparison and receives a binary decision as to whether the item of the transaction is similar or is not similar to the reference item. Also, in this embodiment, the theft detection manager 113 selects the threshold score based on the PLU code and provides the threshold score as input to the similarity model 114C.

When theft detection manager 113 determines from the threshold score comparison or from an indication provided by similarity model 114C that the item of the transaction is not similar to the reference item associated with the PLU code, theft detection manager 113 sends an alert or an interrupt back to transaction manager 123. Transaction manager 123 processes a custom workflow based on the alert or interrupt.

For example, transaction manager 123 presents a model image of the reference item alongside the image taken of the item of the transaction within the transaction interface and asks the operator to confirm that the two items are the same. Assuming the operator confirms that the two items are both associated with the PLU code originally provided by the operator during the initial PLU code search, transaction manager 123 can either accept the decision of the operator as an override or suspend the transaction for an audit by an attendant. When the attendant is dispatched and confirms that the PLU code is correct with an override, transaction manager 123 notifies theft detection manager 113.

In an embodiment, theft detection manager 113 flags the current reduced dimensionality feature vector provided by the PCA module and/or model 114B for the item of the transaction and updates the current reduced dimensionality feature vector into cache and into reference storage bank 116. In this way, no training is needed to obtain better accuracy from the similarity model 114C because a subsequent time the item code or category associated with the misidentified item of the transaction is encountered, the reduced dimensionality feature vector is retrieved from the cached reference vectors 115 and provided as a reference vector for the item code or category ensuring that similarity model 114C will properly determine that item of a subsequent transaction is similar to a reference item associated with the item code or category.

In an embodiment, theft detection manager 113 maintains a cache table within a cache memory for the cached reference vectors 115. The theft detection manager 113 maintains the cache table in synchronization with the reference storage bank 116. Thus, when a reference vector is added, modified, and/or deleted, theft detection manager 113 ensures the change is propagated both the cache table and the reference storage bank 116.

In an embodiment, terminal 120 is a self-service terminal, which is operated by a customer during a self-checkout. In an embodiment, terminal 120 is a point-of-sale terminal, which is operated by a cashier during an assisted customer checkout. Thus, system 100 is deployable with assisted customer checkouts to verify the accuracy of cashiers in identifying produce items.

FIG. 1B is a flow diagram of a method 130 for item similarity analysis for theft detection, according to an example embodiment. The method is implemented as executable instructions representing the theft detection manager 113. The instructions are executed by processor 111 on cloud 110.

At 131, the theft detection manager 113 trains base model 114A on images of items per item code or category to generate N-dimensional feature vectors. Each item code includes a plurality of N-dimensional feature vectors in a data set following training.

At 132, theft detection manager 113 configures or trains a PCA module and/or model 114B to reduce the dimensionality of the N-dimensional feature vectors per item code or category and generated reference vectors. Each data set for a corresponding item code or category is processed through the PCA module and/or model 114 resulting in a fewer number of feature vectors per item code or category and each feature vector with substantially less dimensions or features. The remaining reference vectors and their corresponding item codes or categories are stored in the reference storage bank 116 and preloaded into cache as cached reference vectors 115.

At 133, theft detection manager 113 trains similarity model 114C to determine similarity between a current item and a reference item. The similarity model 114C receives as input during training a given item code or category, the corresponding reference vectors from cache linked to the item code or category, and a current reduced dimensionality feature vector associated with a current image of a current item that is being compared against a reference item linked to the item code or category. In an embodiment, the similarity model 114C is trained to output a similarity score indicating the degree to which the reference item is similar to the current item. In an embodiment, similarity model 114C is also trained to receive a PLU code specific threshold score and provide as output a binary decision as to whether the reference item and the current item are the same or similar.

At 134, theft detection manager 113 receives an item image for an item of a transaction and an item code or category. Transaction manager 123 provides the image and item code or category responsive to an operator of the terminal indicating that the item is associated with a PLU code search.

At 135, theft detection manager 113 crops the item image producing a cropped item image with substantially just the pixels associated with the item remaining in the cropped image. The cropped image and the item code or category are provided as input to the base model 114A. Responsive to the input, the base model 114A returns a current N-dimensional feature vector as output to the theft detection manager 113.

At 136, theft detection manager 113 processes the PCA module or model 114B by providing as input the current N-dimensional feature vector for the item of the transaction and the item code or category. Responsive to the input, the PCA module or model 114B returns a current reduced dimensionality feature vector as a current feature vector to theft detection manager 113.

At 137, theft detection manager 113 determines if the item is similar or not similar to a reference item linked to the item code or category by retrieving the reference vectors linked to the item code or category from cache and providing the item code or category, the retrieved reference vectors, and the current feature vector as input to similarity model 114C. In an embodiment, theft detection manager 113 also provides as input an item code or category specific threshold score linked to the item code or category. Theft detection manager 113 determines from either a similarity score returned as output from the similarity model 114C or from a binary decision returned from similarity model 114C whether the item of the transaction is or is not similar or the same as a reference item linked to the item code or category. When the item is determined to be dissimilar to the reference item, an alert or interrupt is sent to transaction manager 123 causing transaction manager 123 to process a custom exception workflow to verify no theft is occurring during the transaction. An alert sent is an indication that there is potential theft occurring at the terminal 120 during a transaction.

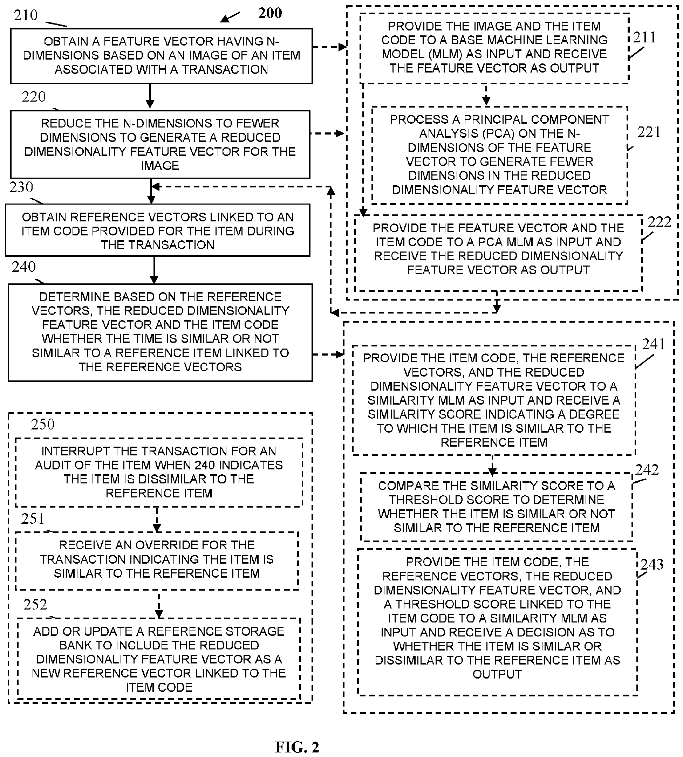

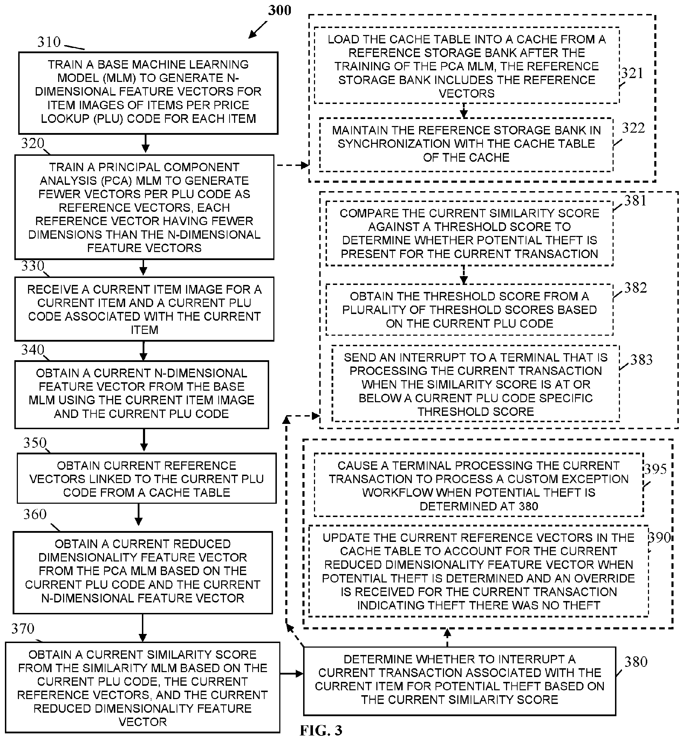

The above-referenced embodiments and other embodiments are now discussed with reference to FIGS. 2 and 3. FIG. 2 is a flow diagram of a method 200 for item similarity analysis for theft detection, according to an example embodiment. The software module(s) that implements the method 200 is referred to as a "theft detector." The theft detector is implemented as executable instructions programmed and residing within memory and/or a non-transitory computer-readable (processor-readable) storage medium and executed by one or more processors of one or more devices. The processor(s) of the device(s) that executes the theft detector are specifically configured and programmed to process the theft detector. The theft detector has access to one or more network connections during its processing. The connections can be wired, wireless, or a combination of wired and wireless.

In an embodiment, the device that executes the theft detector is cloud 110 or server 110. In an embodiment, server 110 is a server of a given retailer that manages multiple stores, each store having a plurality of terminals 120. In an embodiment, terminal 120 is a self-service terminal or a point-of-sale terminal. In an embodiment, the item theft detector is some, all, or any combination of, theft detection manager 113, 114A, 114B, 114C, and/or method 130 of FIG. 1B.

At 210, theft detector obtains a feature vector having N-dimensions based on an image of an item associated with a transaction. For example, transaction manager 123 sends an image of the item and an entered item code or category provided by an operator of the terminal 120 for the item to theft detector.

In an embodiment, at 211, the theft detector provides the image and the item code to a base model 114A as input. Responsive to the input, base model 114A provides as output the feature vector of N-dimensions back to theft detector.

At 220, the theft detector reduces the N-dimensions to fewer dimensions to generate a reduced dimensionality feature vector for the image. In an embodiment of 211 and 220, at 221, the theft detector processes a PCA module 114B on the N-dimensions of the feature vector to generate fewer dimensions in the reduced dimensionality feature vector. In an embodiment of 211 and 220, at 221, the theft detector provides the feature vector and the item code to a PCA model 114B as input and receives the reduced dimensionality feature vector as output. In an embodiment, the theft detector obtains the reduced dimensionality feature vector by processing a combination of a PCA module 114B and a PCA model 114B.

At 230, the theft detector obtains reference vectors linked to the item code. The item code provided for the item by an operator of terminal 120 during the transaction.

At 240, the theft detector determines based on the reference vectors, the reduced dimensionality feature vector and the item code whether the time is similar or not similar to a reference item linked to the reference vectors. In an embodiment, at 241, the theft detector provides the item code, the reference vectors, and the reduced dimensionality feature vector at a similarity MLM 114C as input. Responsive to the input, the similarity MLM 114C provides as output a similarity score indicating a degree to which the item is similar to the reference item. In an embodiment of 241 and at 242, the theft detector compares the similarity score to a threshold score to determine whether the item is similar or not similar to the reference item.

In an embodiment, at 243, the theft detector provides the item code, the reference vectors, the reduced dimensionality feature vector, and a threshold score linked to the item code as input to a similarity MLM 114C. Responsive to the input, the similarity MLM 114C provides a decision as to whether the item is similar or dissimilar to the reference item as output.

In an embodiment, at 250, the theft detector interrupts the transaction for an audit of the item when the determination at 240 indicates the item is dissimilar to the reference item. In an embodiment of 250 and at 251, the theft detector receives an override for the transaction indicating the item is similar to the reference item. In an embodiment of 251 and at 252, the theft detector adds or updates a reference storage bank 116 to include or to account for the reduced dimensionality feature vector as a new reference vector linked to the item code.

FIG. 3 is a flow diagram of a method 300 for item similarity analysis for theft detection, according to an example embodiment. The software module(s) that implements the method 300 is referred to as a "produce theft manager." The produce theft manager is implemented as executable instructions programmed and residing within memory and/or a non-transitory computer-readable (processor-readable) storage medium and executed by one or more processors of one or more devices. The processor(s) of the device(s) that executes the produce theft manager are specifically configured and programmed to process the produce theft manager. The produce theft manager has access to one or more network connections during its processing. The connections can be wired, wireless, or a combination of wired and wireless.

In an embodiment, the device that executes the produce theft manager is cloud 110 or server 110. In an embodiment, server 110 is a server of a given retailer that manages multiple stores, each store having a plurality of terminals 120. In an embodiment, terminal 120 is a self-service terminal or a point-of-sale terminal. In an embodiment, the produce theft manager is some, all, or any combination of, theft detection manager 113, 114A, 114B, 114C, method 130, and/or method 200. In an embodiment, the produce theft manager presents another, and in some ways, an enhanced processing perspective to that which was discussed above with method 130 of FIG. 1B and method 200 of FIG. 2.

At 310, produce theft manager trains a base model 114A to generate N-dimensional feature vectors for item images of items per PLU code for each item. That is, each PLU code includes a plurality of N-dimensionality feature vectors after training of the base model 114A.

At 320, the produce theft manager trains a PCA model 114B to generate fewer vectors per PLU code as reference vectors. Each reference vector has fewer dimensions that the N-dimensional feature vectors.

In an embodiment, at 321, the produce theft manager loads a cache table into a cache from a reference storage bank 116 after the training of 320. The reference storage bank 116 includes the reference vectors. In an embodiment of 321 and at 322, the produce theft manager maintains the reference storage bank 116 in synchronization with the cache table of the cache.

At 330, the produce theft manager receives a current item image for a current item and a current PLU code associated with the current item. Again, when an operator of terminal 120 places an item, such as a produce item, on a produce scale of the terminal 120 and initiates a PLU code search, transaction manager 123 activates a camera/scanner 124 to capture an image of the item. Once the operator selects a PLU code from the search, the transaction manager 123 sends the current item image and the current PLU code to the produce theft manager.

At 340, the produce theft manager obtains a current N-dimensional feature vector for the base MLM 114A using the current item image and the current PLU code. At 350, the produce theft manager obtains current reference vectors linked to the current PLU code from a cache table.

At 360, the produce theft manager obtains a current reduced dimensionality vector from the PCA MLM 114B based on the current PLU code and the current N-dimensional feature vector. At 370, the produce theft manager obtains a current similarity score from the similarity MLM 114C based on the current PLU code, the current reference vectors, and the current reduced dimensionality feature vector.

At 380, the produce theft manager determines whether to interrupt a current transaction associated with the current item for potential theft based on the current similarity score. In an embodiment, at 381, the produce theft manager compares the current similarity score against a threshold score to determine whether potential theft is present for the current transaction. In an embodiment of 381 and at 382, the produce theft manager obtains the threshold score from a plurality of threshold scores based on the current PLU code. In an embodiment of 380 and at 383, the produce theft manager sends an interrupt to a terminal 120 that is processing the current transaction when the similarity score is at or below a current PLU code specific threshold score.

In an embodiment, at 390, the produce theft manager updates the current reference vectors in the cache table to account for the current reduced dimensionality feature vector when potential theft is determined and an override is received for the current transaction. The override indicates that there was no theft when the produce theft manager determined there was potential theft.

In an embodiment, at 395, the produce theft manager causes a terminal 120 processing the current transaction to process a custom exception workflow when potential theft is determined by the produce theft manager at 380. In an embodiment, the custom exception workflow causes the transaction manager to display a model reference item image for the current PLU code alongside the current image of the item and requests that the operator of the terminal confirm the current PLU code as entered is correct.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner. Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
obtaining a feature vector having N-dimensions based on an image of an item associated with a transaction;
reducing the N-dimensions to fewer dimensions to generate a reduced dimensionality feature vector for the image;
obtaining reference vectors linked to an item code provided for the item during the transaction;
determining based on the reference vectors, the reduced dimensionality feature vector, and the item code whether the item is similar or not similar to a reference item linked to the reference vectors.

2. The method of claim 1 further comprising:
interrupting the transaction for an audit of the item when the determining indicates the item is dissimilar to the reference item.

3. The method of claim 1 or claim 2 further comprising:
receiving an override for the transaction indicating the item is similar to the reference item.

4. The method of claim 3, wherein receiving the override further includes adding or updating a reference storage back to include the reduced dimensionality feature vector as a new reference vector linked to the item code.

5. The method of any preceding claim, wherein obtaining the feature vector further includes providing the image and the item code to a base machine learning model (MLM) as input and receiving the feature vector as output from the base MLM; and/or
wherein reducing further includes processing a principal component analysis on the N-dimensions of the feature vector to generate the fewer dimensions in the reduced dimensionality feature vector; and optionally
wherein reducing further includes providing the feature vector and the item code to a principal component analysis (PCA) MLM as input and receiving the reduced dimensionality feature vector as output from the PCA MLM.

6. The method of any preceding claim, wherein determining further includes providing the item code, the reference vectors, and the reduced dimensionality feature vector to a similarity machine learning model (MLM) as input and receiving a similarity score indicating a degree to which the item is similar to the reference item; and optionally
further comprising, comparing the similarity score to a threshold score to determined whether the item is similar or not similar to the reference item.

7. The method of any one of claim 1 to 5, wherein determining further includes providing the item code, the reference vectors, the reduced dimensionality feature vector, and threshold score linked to the item code to a similarity machine learning model (MLM) as input and receiving a decision as to whether the item is similar or dissimilar to the reference item as output from the similarity MLM.

8. A method, comprising:
training a base machine learning model (MLM) to generate N-dimensional feature vectors for item images of items per price lookup (PLU) code for each item;
training a principal component analysis (PCA) MLM to generate fewer vectors per PLU code as reference vectors, each reference vector having fewer dimensions that the N-dimensional feature vectors;
training a similarity MLM to generate a similarity score between a given item and a given reference item based on a given PLU code, corresponding reference vectors for the given PLU code, and a given reduced dimensionality feature vector for a given image of the given item;
receiving a current item image for a current item and a current PLU code associated with the current item;
obtaining a current N-dimensional feature vector from the base MLM using the current item image and the current PLU code;
obtaining current reference vectors linked to the current PLU code from a cache table;
obtaining a current reduced dimensionality feature vector from the PCA MLM based on the current PLU code and the current N-dimensional feature vector;
obtaining a current similarity score from the similarity MLM based on the current PLU code, the current reference vectors, and the current reduced dimensionality feature vector; and
determining whether to interrupt a current transaction associated with the current item for potential theft based on the current similarity score.

9. The method of claim 8 further comprising:
updating the current reference vectors in the cache table to account for the current reduced dimensionality feature vector when potential theft is determined and an override is received for the current transaction indicating that there was no theft.

10. The method of claim 8 or claim 9 further comprising:
causing a transaction terminal processing the current transaction to process a custom exception workflow when potential theft is determined.

11. The method of any one of claims 8 to 10, wherein training the PCA MLM further includes loading the cache table into a cache from a reference storage bank after the training of the PCA MLM, wherein the reference storage bank includes the reference vectors; and optionally
wherein loading further includes maintaining the reference storage bank in synchronization with the cache table of the cache.

12. The method of any one of claim 8 to 11, wherein determining further includes comparing the current similarity score against a threshold score to determine whether potential theft is present for the current transaction; and optionally
wherein comparing further includes obtaining the threshold score from a plurality of threshold scores based on the current PLU code.

13. The method of any one of claims 8 to 12, wherein determining further includes sending an interrupt to a terminal that is processing the current transaction when the similarity score is at or below a current PLU code specific threshold score.

14. A system, comprising:
at least one server comprising at least one processor and a non-transitory computer-readable storage medium;
the non-transitory computer-readable storage medium comprising executable instructions; and
the executable instructions when executed by at least one processor cause the at least one processor to perform operations, comprising:
receiving an item image for an item placed on a scale of a terminal during a transaction;
receiving an item code entered for the item at the terminal;
obtaining an N-dimensional feature vector based on the item image and the item code;
obtaining a reduced dimensionality feature vector for the N-dimensional vector based on the N-dimensional vector and the item code;
obtaining reference vectors linked to the item code, each reference vector having a same number of dimensions as the reduced dimensionality feature vector;
determining based on the item code, the reduced dimensionality feature vector, and the reference vectors whether the item is similar or not similar to a reference item linked to the reference vectors and the item code; and
interrupting the transaction for an audit when the determining indicates that the item is dissimilar to the reference item.

15. The system of claim 14, wherein the terminal is a self-service terminal operated by a customer during the transaction or the terminal is a point-of-sale terminal operated by a cashier for the customer during the transaction.
